# EUROPEAN PATENT SPECIFICATION

(11) **EP 4 403 468 B1**
(45) Date of publication and mention of the grant of the patent: **27.05.2026**
(21) Application number: 24153507.9
(22) Date of filing: 23.01.2024
(51) Int. Cl.: B64D 13/00, B64D 13/06

(54) **TWO STAGE GASPER FOR VERTICAL AND HORIZONTAL CONTROL OF AIRFLOW DISCHARGE**
ZWEISTUFIGER LUFTAUSSTRÖMER ZUR VERTIKALEN UND HORIZONTALEN STEUERUNG DER LUFTSTRÖMUNG
AÉRATEUR À DEUX ÉTAGES POUR LA COMMANDE VERTICALE ET HORIZONTALE DE LA DÉCHARGE DE FLUX D'AIR

(30) Priority: 23.01.2023 IN 202341004485; 23.03.2023 US 202318189094
(43) Date of publication of application: 24.07.2024
(73) Proprietor: B/E Aerospace, Inc., Winston-Salem, NC 27105 (US)
(72) Inventor: KANDUKURI, Ravindra R., Secunderabad 500009 (IN)
(74) Representative: Dehns

(56) References cited:
- DE-A1- 102016 106 888
- DE-A1- 3 105 080
- DE-B- 1 297 504
- DE-U- 6 935 036
- GB-A- 520 452
- US-A- 4 610 196
- US-A1- 2021 146 859

## Description

### CROSS-REFERENCE TO RELATED APPLICATIONS

This application claims priority to, and the benefit of, India Patent Application No. 202341004485 (DAS CODE: D88C), filed January 23, 2023, and titled "TWO STAGE GASPER FOR VERTICAL AND HORIZONTAL CONTROL OF AIRFLOW DISCHARGE," and US application 18/189,094.

### FIELD

The present disclosure relates to gaspers for use in aircraft and, more particularly, to gaspers that are manually adjustable to enable both vertically downward and horizontally across airflow in the aircraft interior.

### BACKGROUND

Passenger aircraft, particularly commercial passenger aircraft, include various features for improving passenger comfort. For example, these aircraft may include reclining seats, seatback infotainment systems, and gaspers. The gaspers direct relatively cool air downward towards the passengers from above the passenger and can be adjusted for both a downward orientation and velocity of exiting air. Direct airflow (i.e., downward airflow) can cause discomfort to passengers. In instances, it is preferred to have distributed or indirect airflow by seated passengers.

Also, direct airflow to passengers can cause increases of transmission of pathogens by more easily spreading water droplets caused by a passenger coughing, sneezing, and/or talking. These water droplets may include pathogens such as bacteria or viruses.

It is desirable to enable an option for passengers to control the airflow to enable both direct and indirect air distribution when seated with manually adjustable gaspers. It is desirable to reduce transmission of pathogens between passengers on an aircraft, especially with the relative difficulty in social distancing on a commercial passenger aircraft by use of manually adjustable gaspers to redirect the airflow.

Examples of the prior art are provided by: DE3105080A1, US4610196A, DE6935036U, US2021146859A1.

### SUMMARY

The invention provides a gasper assembly as defined in claim 1 and a method of manufacturing such an assembly as defined in claim 3.

The foregoing features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals may denote like elements in at least a portion of the figures.
FIG. 1A illustrates an aircraft cabin having a plurality of gaspers, in accordance with various embodiments;
FIG. 1B illustrates an aircraft cabin having a plurality of gaspers with both direct and indirect airflow, in accordance with various embodiments;
FIGS. 2A, 2B and 2C illustrates various features of the gaspers of FIGS. 1A and 1B, in accordance with various embodiments;
FIGS. 3A, 3B, and 3C illustrate a set of diagrams of rotation of the gasper in accordance with various embodiments;
FIG. 4 illustrates various features of a gasper having side vents, in accordance with various embodiments; and
FIG. 5 illustrates a flowchart of a method of manufacture of the gasper in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

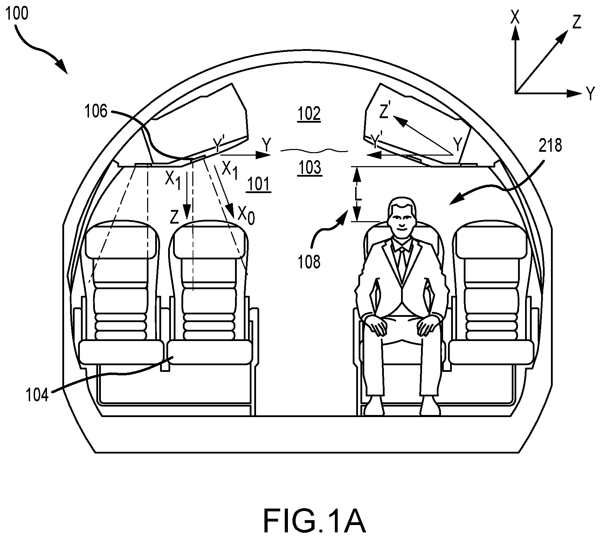

Referring to FIG. 1A, a cabin 102 of an aircraft 100 is shown. The aircraft 100 may include any aircraft such as an airplane, a helicopter, or any other aircraft. The cabin 102 has one or more passenger seat 104 in which one or more passengers may rest. The cabin 102 may include one or more gasper 106 designed to direct air (e.g., including one or more of filtered air or fresh air from outside of the cabin 102). Although the gasper 106 is shown in the aircraft cabin 102, one skilled in the art will realize that the gasper 106 may likewise be installed in a cockpit or other area of an aircraft. One of the gaspers 106 (which may be associated with the seat 104) may be designed to direct air towards the seat 104 to reduce the likelihood of pathogens from a first passenger reaching a second passenger located in the adjacent seat (i.e., next or a near seat), to one or more passengers in a locality in the interior of the aircraft (including a boarded set of passengers), or to spreading in a vicinity of any confined space or interior area of the aircraft that is nearby. In that regard, a beneficial distance 108 between a gasper 106 and a passenger may provide the greatest reduction in pathogens reaching the passenger. Thus, the gaspers 106 may be positioned to achieve the optimal distance 108 for any size passenger in the seat 104. As discussed further below, the gaspers 106 may include additional or alternative features that further reduce the transfer of pathogens between passengers in the cabin 102 by enabling direct and indirect airflow about the passenger. In various embodiments, the gaspers 106 can be configured for direct airflow (X-X', X-Z') 101 and indirect airflow (Y-Y', Y-Z') in the cabin 103.

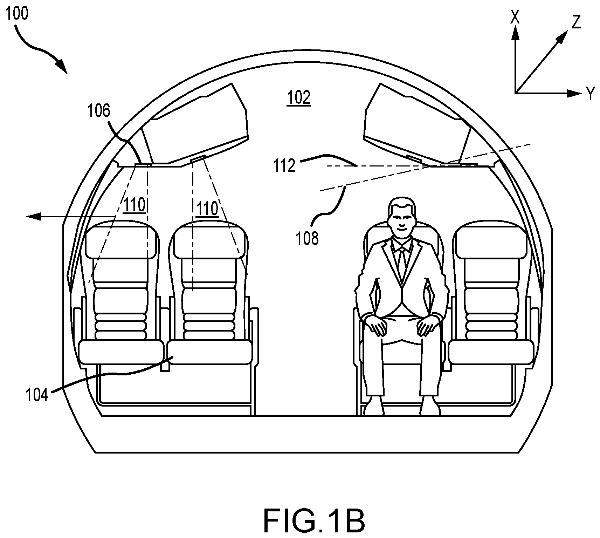

Referring to FIG. 1B, a first, second, and third stage of configuration for the gasper is illustrated to allow for airflow that is vertically down and for airflow that is horizontal. In the cabin 102 of the aircraft 100, the gasper 106 is manually adjusted by the passenger by rotating the gasper 106 by an initial rotation to expose side outlets or vents that allow for the distribution of the airflow indirectly parallel to the aircraft floor and around the passenger. In various embodiments, the distribution of the airflow indirectly is in a horizontal plane, via a first stage 112 of configuration of the gasper 106, across the interior of the cabin 102 of the aircraft 100 so the passenger does not receive a direct airflow directed at the passenger by a downward outlet orientation of the gasper 106.

In various embodiments, the passenger can control the horizontal velocity of the airflow from the gasper 106 by adjusting the rotation in a range of the initial or first rotation of the gasper 106. The more the passenger rotates the gasper 106 from an initial closed position and during the first stage 112 of configuration of the gasper 106, the more the side outlets (i.e., vents, lateral openings, cut-outs) are opened or exposed by the body of the gasper 106 upon a continuous manual rotation. With the continuous manual rotation in the first stage 112 of configuration of the gasper 106, the more the side outlets are exposed and correspondently the more the velocity of airflow is increased horizontally.

In various embodiments, the gasper 106 can be further adjusted by another manual rotation of the passenger to cause closure of the side outlets of the gasper 106 and to open an outlet on the front or distal end of the gasper 106 to direct the airflow downward or in a downward orientation to the passenger. In various embodiments, in this second stage 110 of configuration of the gasper 106, the gasper 106 is enabled to allow for the direct airflow vertically downward towards the passenger when the passenger is seated and the gasper 106 can be manually oriented in a downward direction as desired by the passenger to direct the airflow directly to the passenger by manual adjustment. In various exemplary embodiments, upon the further rotation of the gasper 106, the side outlets are not exposed (i.e., sides of the gasper body are closed), and airflow is directed only through the front outlet.

In various embodiments, in a third stage 114, the passenger adjusts the gasper 106 by another or third rotation that cause both opening of the side outlets and the outlet at the front or distal end of the gasper 106 that allows for both indirect and direct airflow to and around the passenger. The side outlets and front outlet are configured to divide the airflow between both outlets by limiting the airflow (i.e., configuring the side outlet and front outlet to each be partly open) in either direction equalizing the pressure between the side outlets and the front outlet for the airflow.

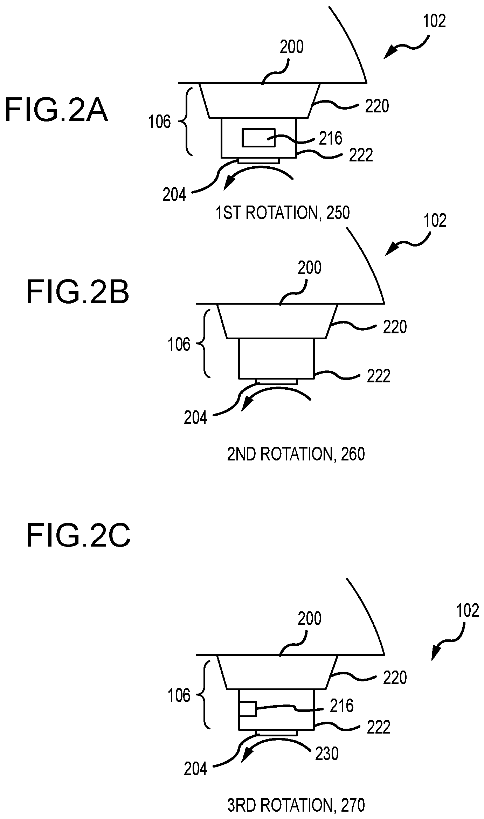

Referring now to FIG. 2A, the gasper 106 may include an inlet 200 designed to receive one or more of fresh or filtered air. The gasper 106 may further include a side outlet 216 and a front outlet 204 designed to direct air across the cabin 102 and towards a passenger or passenger seat in the cabin 102. The gasper 106 may further include a body 222 designed to port air from the inlet 200 to the side outlet 216 and front outlet 204. The body 222 may have side outlets 216 configured at different degrees (0 degrees, 90 degrees, 180 degrees, 270 degrees) around the circumference of the body 222. As the body 222 of the gasper 106 is rotated from its socket 220 (i.e., base or seat) from a stowed or closed position, by a first rotation 250, the side outlets 216 are exposed (i.e., opened or at least partially opened) to allow airflow from the inlet 200 through the side outlet 216 while the front outlet 204 remains closed.

In FIG. 2B as the body 222 of the gasper 106 is rotated further or a second rotation 260, the side outlets 216 are no longer exposed (i.e., closed) and the front outlet 204 is opened. In various embodiments, the side outlets 216 can also be partially closed to reduced or limit airflow.

In FIG. 2C, at third rotation 270, the front outlet 204 is partly closed and the side outlet 216 is partly exposed. This allows airflow through both outlets. By keeping the side outlet 216 partly exposed and the front outlet 204 partly open, the air pressure is equalized to allow airflow through both outlets. In various embodiments, the third rotation 270 may be configured as a limited or partial rotation amount that allows only part of the side outlet 216 to be exposed in the rotation. In this third rotation 270 there is both direct and indirect airflow to the passenger in the cabin 102. In various embodiments, in the third rotation 270, the gasper 106 may be configured to enable the side outlets (i.e., side vents) to be completely open in which the airflow may be discharged with a low or lower pressure from the throughput flow channeled in both the side (horizontal) and front (vertical) outlets. In various embodiments, the third rotation 270 may be configured as a complete rotation with both sets of outlets, the side outlet and front outlet opening simultaneously or nearly at the same-time per the rotation and/or in a corresponding amount or in different amounts. For example, while rotating or in the rotation (partial of complete), the side (horizonal) outlet maybe configured to open about twenty-five percent with the front (vertical) outlet opening a corresponding amount of about twenty-five percent with the rotation. In various embodiments, the amount of the opening of either outlet may correspond with the rotation amount, for example, the opening of the side outlet (horizontal vent) is opened about fifty percent along with the front outlet opening fifty percent that also correlates to a half rotation of the gasper 106 during the third rotation of the gasper 106. In this way, the amount of manual circular rotating of the gasper 106 is tied to amount of airflow that is allowed or channeled through both the side and front outlets, and so forth.

In various embodiments, the gasper 106 may be designed closed or locked within a passenger service unit above a respective passenger seat. For example, the gasper 106 may be locked by twisting the gasper 106 in a first direction, and may be released or opened by twisting the gasper 106 in a second direction. In various embodiments, the gasper 106 may be designed to be installed (e.g., retrofit) in an existing aircraft cabin, for example, in place of an existing gasper 106. For example, the existing gasper may be removed and the gasper 106 installed in its place, or the gasper 106 may be installed over an existing gasper. In various embodiments, only the body 222 of the gasper 106 needs to be replaced. For an existing gasper 106, the body of the gasper 106 may be exchanged with a new body that has side outlets 216 or vents configured and inserted into a legacy socket of the gasper 106 in the passenger service unit.

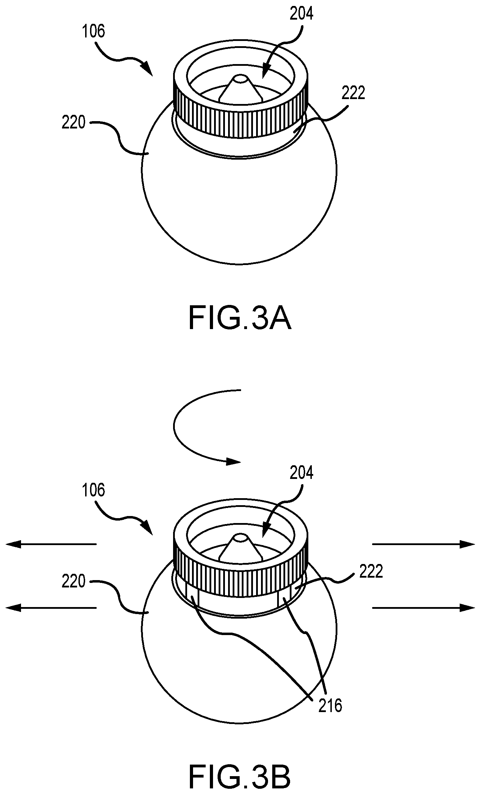

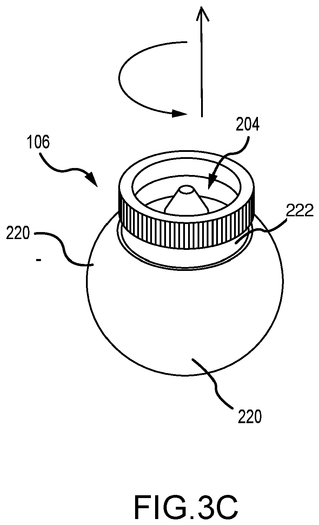

Referring now to FIGS. 3A, 3B, and 3C, a gasper 106 is shown in a closed state (shown in FIG. 3A) and an open state (in FIGS. 3B and 3C). The gasper 300 includes a socket 220 in which the body (i.e., cylindrical sleeve) 222 sits and can be manually rotated by a passenger. In the initial position, in FIG. 3A, the gasper 106 is closed and there is no airflow from the front outlet 204.

Referring to FIG. 3B, upon rotating manually the body 222 one rotation or revolution, airflow is enabled through side outlets 216 or vents configured in the body 222 of the gasper 106. In various embodiments, the side outlets 216 are configured at 0 degrees, 90 degrees, 180 degrees, and 270 degrees on the perimeter or circumference of the body 222 of the gasper 106. When the gasper 106 is rotated one rotation or circle, the side outlets 216 or vents will open to let air flow. Here, the front outlet 204 remains close. The direction of the airflow from the side outlets 216 is parallel to the aircraft flow and is horizontal.

Referring to FIG. 3C, upon turning or rotating the cylindrical body 222 another rotation or second circle, the front outlet 204 is opened and the side outlets 216 are no longer exposed (i.e., closed) and the airflow is directed through the front outlet 204. Hence, if a passenger rotates the cylindrical body 222 in the socket 220 of the gasper 106 the configuration of the gasper 106 reverts to a legacy style configuration of having only downward vertical airflow directed directly to the passenger. Further, the appearance of the gasper 106 after rotation of two circles seamless gives the appearance of the legacy style gasper 106 with the side outlets 216 or vents hidden by the cylindrical body 222 of the gasper 106.

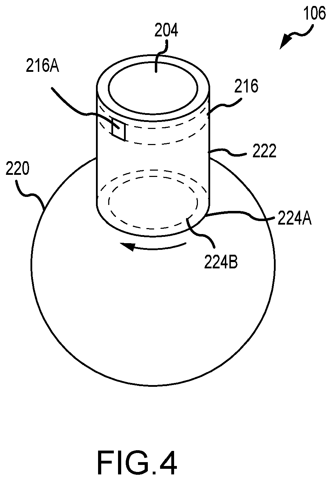

FIG. 4 illustrates a configuration of the cylindrical body of the gasper in accordance with various embodiments. In FIG. 4, the gasper 106 has a cylindrical body 222 that sits in the socket 220 of the gasper 106 configured with an inner layer 224B and an outer layer 224A. Both the inner layer 224B and the outer layer 224A are configured with side outlets 216 that align when rotated (i.e., after the first rotation) to allow airflow through the sides of the body 222 of the gasper 106 and do not align after a second rotation to prevent airflow from the sides of the body 222.

In various embodiments, the cylindrical body 222 can be configured to extend from the socket 220 by threading of the body 222 to the socket 220 to expose the side outlets 216 of the gasper 106 to allow for horizontal airflow.

In both cases, after the second rotation, the side outlets 216 would be sealed and the airflow would be only through the front outlet 204.

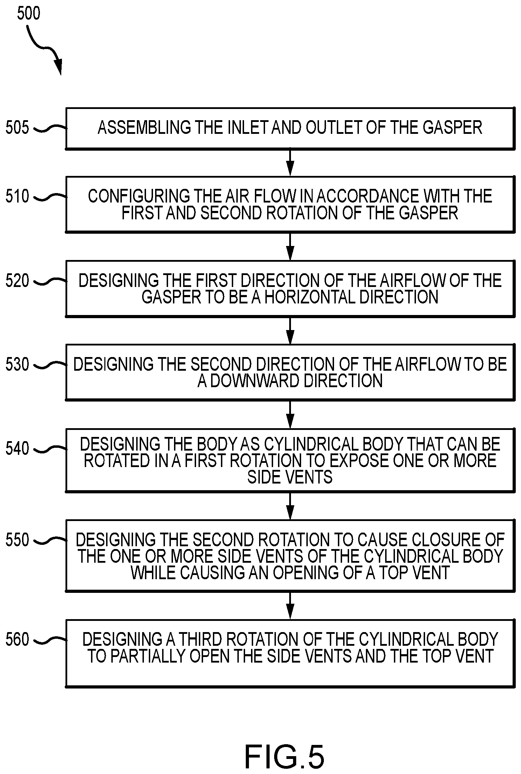

Turning now to FIG. 5, a flowchart of a manufacturing method of a gasper assembly illustrated in accordance with various embodiments. In FIG. 5 the gasper is assembled for indirect and direct airflow in accordance with various embodiments.

At step 505, a method to manufacture of a gasper in an apparatus to direct airflow in an aircraft includes assembling a gasper with a set of components comprising at least an inlet and an outlet. The inlet is assembled with a socket to receive intake air; a cylinder is mounted in the socket. The cylinder is manually adjustable to direct a stream of airflow received via the inlet in a first direction and in a second direction.

At step 510, the body is further configured in the socket to direct by a first rotation of the body a stream of airflow received by at the inlet to the socket in a first direction and by a second rotation to direct the stream of airflow in a second direction. The first direction is designed to be substantially perpendicular to the second direction. At step 520, the first direction is designed to be a horizontal direction substantially parallel to a floor surface of the aircraft. At step 530, the second direction comprises a downward direction substantially perpendicular to a floor surface of the aircraft. At step 540, the body is configured as a cylindrical body mounted in the socket and responds to a first rotation to cause the cylindrical body to expose one or more side vents configured around a perimeter of the cylindrical body. At step 550, the cylindrical body mounted in the socket is further configured to respond to a second rotation to cause closure of the one or more side vents while causing an opening of a top vent at a distal end of the cylindrical body. At step 560, the cylindrical body is configured to respond to a third rotation to partially or completely open the side vents and the top vent to enable airflow through both vents with substantially equal pressure designed between each vent.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments that still fall within the scope of the claims.

## Claims

1. A gasper assembly for use in an aircraft, the gasper assembly comprising:
an inlet (200) comprising a socket (220) configured to receive intake air; and
an outlet (204) comprising a cylindrical body (222) mounted in the socket that is adjustable to direct a stream of airflow received via the inlet in a first direction, which is a horizontal direction when the gasper assembly is installed in the aircraft, and in a second direction, which is a downward vertical direction when the gasper assembly is installed in the aircraft, substantially perpendicular to the horizontal direction;
wherein the cylindrical body is further configured by a first rotation about its longitudinal axis, which is vertical when the gasper assembly is installed in the aircraft, relative to the socket to direct the stream of airflow in the first direction and by a second rotation about its longitudinal axis relative to the socket to direct the stream of airflow in the second direction;
wherein the cylindrical body is formed of an inner layer (224B) and an outer layer (224A) arranged coaxially about the longitudinal axis and defining a front outlet (204) at an open end, the inner and outer layer each having side vents (216) therethrough, spaced circumferentially around the inner and outer layers such that the first rotation causes the side vents in the inner layer to align with the side vents in the outer layer to direct the stream of airflow in the horizontal direction, and the second rotation causes the side vents in the inner layer to not align with the side vents in the outer layer to prevent the stream of airflow in the horizontal direction and cause the stream of airflow to flow in the downward direction only, through the front outlet (204).

2. The gasper assembly of claim 1, wherein the side vents are positioned in a set of locations around the perimeter of the cylindrical body comprising a circle at locations of approximately at least 0 degrees, 90 degrees, 180 degrees, and 270 degrees.

3. A method to manufacture of a gasper assembly as claimed in claim 1 or 2, the method comprising:
assembling the inlet with the socket to receive intake air;
mounting the cylindrical body in the socket wherein the cylindrical body is adjustable to direct the stream of airflow received via the inlet in the first direction and in the second direction.

## Patentansprüche

1. Gasper-Anordnung zur Verwendung in einem Luftfahrzeug, wobei die Gasper-Anordnung umfasst:
einen Einlass (200), der eine Buchse (220) umfasst, die konfiguriert ist, um Zuluft aufzunehmen; und
einen Auslass (204), der einen zylindrischen Körper (222) umfasst, der in der Buchse montiert ist und der einstellbar ist, um einen über den Einlass aufgenommenen Luftstrom in eine erste Richtung, die eine horizontale Richtung ist, wenn die Gasper-Anordnung in dem Luftfahrzeug installiert ist, und in eine zweite Richtung, die eine nach unten gerichtete vertikale Richtung ist, wenn die Gasper-Anordnung in dem Luftfahrzeug installiert ist, im Wesentlichen senkrecht zu der horizontalen Richtung zu lenken;
wobei der zylindrische Körper ferner durch eine erste Drehung um seine Längsachse, die vertikal ist, wenn die Gasper-Anordnung in dem Luftfahrzeug installiert ist, relativ zu der Buchse, um den Luftstrom in die erste Richtung zu lenken, und durch eine zweite Drehung um seine Längsachse relativ zu der Buchse, um den Luftstrom in die zweite Richtung zu lenken, konfiguriert ist;
wobei der zylindrische Körper aus einer Innenschicht (224B) und einer Außenschicht (224A) gebildet ist, die koaxial um die Längsachse angeordnet sind und einen vorderen Auslass (204) an einem offenen Ende definieren, wobei die Innenschicht und die Außenschicht jeweils durchgehende Seitenbelüftungsöffnungen (216) aufweisen, die in Umfangsrichtung um die Innenschicht und die Außenschicht beabstandet sind, derart, dass die erste Drehung bewirkt, dass sich die Seitenbelüftungsöffnungen in der Innenschicht mit den Seitenbelüftungsöffnungen in der Außenschicht ausrichten, um den Luftstrom in die horizontale Richtung zu lenken, und die zweite Drehung bewirkt, dass sich die Seitenbelüftungsöffnungen in der Innenschicht nicht mit den Seitenbelüftungsöffnungen in der Außenschicht ausrichten, um den Luftstrom in die horizontale Richtung zu verhindern und zu bewirken, dass der Luftstrom nur in die nach unten gerichtete Richtung durch den vorderen Auslass (204) strömt.

2. Gasper-Anordnung nach Anspruch 1, wobei die Seitenbelüftungsöffnungen in einem Satz von Stellen um den Umfang des zylindrischen Körpers positioniert sind, der einen Kreis an Stellen von ungefähr mindestens 0 Grad, 90 Grad, 180 Grad und 270 Grad umfasst.

3. Verfahren zur Herstellung von einer Gasper-Anordnung nach Anspruch 1 oder 2, wobei das Verfahren umfasst:
Montieren des Einlasses mit der Buchse, um Zuluft aufzunehmen;
Anbringen des zylindrischen Körpers in der Buchse, wobei der zylindrische Körper einstellbar ist, um den über den Einlass aufgenommenen Luftstrom in die erste Richtung und in die zweite Richtung zu lenken.

## Revendications

1. Ensemble aérateur destiné à être utilisé dans un aéronef, l'ensemble aérateur comprenant :
une entrée (200) comprenant un socle (220) configuré pour recevoir de l'air d'admission ; et
une sortie (204) comprenant un corps cylindrique (222) monté dans le socle qui est réglable pour diriger un flux d'air reçu via l'entrée dans une première direction, qui est une direction horizontale lorsque l'ensemble aérateur est installé dans l'aéronef, et dans une seconde direction, qui est une direction verticale descendante lorsque l'ensemble aérateur est installé dans l'aéronef, sensiblement perpendiculairement à la direction horizontale ;
dans lequel le corps cylindrique est en outre configuré par une première rotation autour de son axe longitudinal, qui est vertical, lorsque l'ensemble aérateur est installé dans l'aéronef, par rapport au socle afin de diriger le flux d'air dans la première direction, et par une seconde rotation autour de son axe longitudinal par rapport au socle afin de diriger le flux d'air dans la seconde direction ;
dans lequel le corps cylindrique est formé d'une couche intérieure (224B) et d'une couche extérieure (224A) disposées coaxialement autour de l'axe longitudinal et définissant une sortie avant (204) à une extrémité ouverte, la couche intérieure et la couche extérieure étant chacune traversée d'évents latéraux (216) espacés circonférentiellement autour des couches intérieure et extérieure de telle sorte que la première rotation provoque l'alignement des évents latéraux de la couche intérieure avec les évents latéraux de la couche extérieure pour diriger le flux d'air dans la direction horizontale, et que la seconde rotation provoque le non-alignement des évents latéraux de la couche intérieure avec les évents latéraux de la couche extérieure pour empêcher le flux d'air dans la direction horizontale et amener le flux d'air à s'écouler uniquement dans la direction descendante, à travers la sortie avant (204).

2. Ensemble aérateur selon la revendication 1, dans lequel les évents latéraux sont positionnés dans un ensemble d'emplacements autour du périmètre du corps cylindrique comprenant un cercle à des emplacements d'environ au moins 0 degré, 90 degrés, 180 degrés et 270 degrés.

3. Procédé de fabrication d'un ensemble aérateur selon la revendication 1 ou 2, le procédé comprenant :
l'assemblage de l'entrée avec le socle pour recevoir de l'air d'admission ;
le montage du corps cylindrique dans le socle, le corps cylindrique étant réglable pour diriger le flux d'air reçu via l'entrée dans la première direction et dans la seconde direction.
